Europäisches Patentamt

European Patent Office

Office européen des brevets

(19)

(11) Numéro de publication : **0 343 074 B1**

(12) **FASCICULE DE BREVET EUROPEEN**

(45) Date de publication du fascicule du brevet :
**29.07.92 Bulletin 92/31**

(51) Int. Cl.$^5$ : **G01L 3/10**

(21) Numéro de dépôt : **89401371.3**

(22) Date de dépôt : **18.05.89**

(54) **Dispositif de mesure de déphasage angulaire et application à un couplemètre.**

(30) Priorité : **19.05.88 FR 8806733**

(43) Date de publication de la demande :
**23.11.89 Bulletin 89/47**

(45) Mention de la délivrance du brevet :
**29.07.92 Bulletin 92/31**

(84) Etats contractants désignés :
**CH DE GB IT LI SE**

(56) Documents cités :
**DE-A- 3 437 379
FR-A- 1 135 367
US-A- 2 621 514
US-A- 3 524 103**

(56) Documents cités :
**SOVIET INVENTIONS ILLUSTRATED, semaine
84/04, 7 mars 1984, résumé no. 84-023148/04,
Derwent Publications Ltd, Londres, GB;&
SU-A-1 006 948 (KIEV AUTOMATION INS) 23-
03-1983**

(73) Titulaire : **TECHNOMESURE
55, avenue Jean Jaurès
F-93350 Le Bourget (FR)**

(72) Inventeur : **O'Mahony, Gérard
95 Rue de Versailles
F-92410 Ville d'Avray (FR)**

(74) Mandataire : **Thévenet, Jean-Bruno et al
Cabinet BEAU DE LOMENIE 55 rue
d'Amsterdam
F-75008 Paris (FR)**

EP 0 343 074 B1

**Description**

La présente invention a pour objet un dispositif de mesure de déphasage angulaire entre un premier tronçon d'arbre tournant et un second tronçon d'arbre tournant, comprenant un premier rotor denté fixé au premier tronçon d'arbre, un second rotor denté identique au premier rotor et fixé au second tronçon d'arbre et des premier et second stators identiques disposés en regard respectivement des premier et second rotors comme dans FR-A-1 135.367 où les stators comportent des enroulements stationnaires, le déphasage des tensions induites étant fonction de la torsion de l'arbre.

L'invention concerne en outre une application d'un tel dispositif notamment à un couplemètre.

On connait déjà des couplemètres utilisant un barreau de torsion dont les extrémités sont reliées respectivement à une extrémité d'arbre fournissant un couple moteur et à une extrémité d'arbre présentant un couple résistant. Le barreau de torsion, qui peut tourner par rapport à une cage extérieure, comporte deux disques dentés montés à chacune des extrémités du barreau de torsion. La cage extérieure porte elle-même deux couronnes dentées entourant des disques dentés,et équipées chacune d'un enroulement stationnaire. Lorsque les dents des disques passent devant les dents intérieures des couronnes dentées, il y a variation de l'induction, ce qui provoque un signal modulé dans les enroulements stationnaires disposés autour des couronnes dentées. Le déphasage entre les deux trains d'ondes disponibles dans les enroulements entourant chacune des couronnes dentées placées en regard des disques dentés montés sur le barreau de torsion est proportionnel à la torsion du barreau sous l'effet de la charge. La mesure de ce déphasage à l'aide d'un phasemètre permet d'en déduire la valeur du couple appliqué au barreau de torsion, une fois le dispositif étalonné. Un tel type de couplemètre implique la présence de circuits électroniques relativement complexes avec horloge et circuits de synchronisation pour la mesure des déphasages temporels entre les deux trains d'ondes alternatives et ne permet pas d'obtenir des résultats de qualité constante pour des vitesses de rotation différentes. La précision de ce type de dispositifs de mesure de couple diminue avec la fréquence des signaux alternatifs produits et le principe même de la méthode de mesure rend celle-ci peu appropriée aux études de phénomènes transitoires.

La présente invention vise à remédier aux inconvénients précités et à permettre la mesure de déphasages angulaires d'une façon simple et précise sur des plages de mesure étendues avec une grande insensibilité à la vitesse de rotation de la partie tournante du dispositif, afin notamment d'en déduire de façon commode la mesure de couples.

L'invention a encore pour but de réaliser un dispositif de mesure de déphasages angulaires dont les circuits électriques sont de conception simple, ne nécessitent pas d'alimentation extérieure et réalisent automatiquement des compensations des défauts résiduels de la géométrie du dispositif.

Ces buts sont atteints grâce à un dispositif de mesure de déphasage angulaire du type mentionné en tête de la description, caractérisé en ce que les enroulements de chaque première paire sont diamétralement opposés et qu'une seconde paire d'enroulements sont diamétralement opposés selon une deuxième direction perpendiculaire à la première direction, les enroulements de chaque paire d'enroulements étant montés en série et les première et seconde paires d'enroulements du second stator étant montées en opposition par rapport aux première et seconde paires d'enroulements du premier stator, et il comprend en outre un circuit magnétique excité par des aimants pour constituer une machine homopolaire, des moyens pour former un premier circuit comportant le montage série de la première paire d'enroulements du premier stator, d'un organe de redressement, d'une résistance de compensation et d'une inductance, des moyens pour former un deuxième circuit comportant le montage série de la seconde paire d'enroulements du premier stator, d'un organe de redressement, d'une résistance de compensation et d'une inductance, des moyens, pour mesurer l'intensité $I_1$ du courant continu correspondant à la somme des courants circulant dans les premier et deuxième circuits montés en parallèle, des moyens pour former un troisième circuit comportant le montage série des premières paires d'enroulements des premier et second stators montés en opposition, d'un organe de redressement et d'une inductance, des moyens pour former un quatrième circuit comportant le montage série des secondes paires d'enroulements des premier et second stators montées en opposition, d'un organe de redressement et d'une inductance, des moyens, pour mesurer l'intensité $I_2$ du courant continu correspondant à la somme des courants circulant dans l'ensemble des troisième et quatrième circuits montés en parallèle et des moyens de calcul du déphasage angulaire $\gamma$ à partir de la formule $\gamma = (b/2) I_2/I_1$ où b représente la largeur des dents des premier et second rotors exprimée en unités de mesure d'angle, I1 représente l'intensité mesurée du courant continu circulant dans l'ensemble des premier et deuxième circuits montés en parallèle et $I_2$ représente l'intensité mesurée du courant continu circulant dans l'ensemble des troisième et quatrième circuits montés en parallèle, les inductances des premier, deuxième, troisième et quatrième circuits étant toutes identiques.

Selon un premier mode de réalisation possible, le dispositif comprend des moyens pour former simultanément les premier, deuxième, troisième et quatrième circuits et des moyens pour effectuer une mesure simultanée de l'intensité $I_1$ du courant circulant dans les premier et deuxième circuits et de l'intensité $I_2$ du courant circulant dans les troisième et quatrième circuits, et pour déterminer le quotient des deux intensités $I_1$ et $I_2$ des courants mesurés simultanément.

Selon un second mode de réalisation, le dispositif comprend des moyens de commutation pour former de façon décalée dans le temps d'une part les premier et second circuits et d'autre part les troisième et quatrième circuits en utilisant des organes de redressement et des inductances communs.

Avantageusement, les inductances des premier et deuxième circuits ainsi que les inductances des troisième et quatrième circuits comprennent une paire de bobines d'induction identiques montées en opposition sur un circuit magnétique commun et présentant un point commun de connexion relié aux moyens de mesure de l'intensité $I_1$, $I_2$ des courants continus circulant respectivement aux noeuds des premier et deuxième circuits et des troisième et quatrième circuits.

Les premier et second tronçons d'arbre tournant peuvent être reliés à un barreau de torsion étalonné pour constituer un torsiomètre.

Toutefois, le dispositif de mesure est également applicable au cas où les premier et second tronçons d'arbre tournant sont constitués directement par les extrémités d'un arbre de machine quelconque, dès lors que cet arbre peut être soumis à une certaine torsion de façon élastique.

Selon un aspect particulier de la présente invention, le dispositif comprend un dispositif à plateau tournant pour assurer l'ajustement des positions relatives des premier et second stators.

Selon un autre aspect particulier de l'invention, le circuit magnétique comprend des aimants montés dans des première et seconde bagues solidaires respectivement des premier et second stators, et une chemise cylindrique coaxiale aux premier et second tronçons d'arbre, disposée dans l'espace libre situé entre les premier et second rotors et présentant des extrémités ménageant de faibles entrefers avec des pièces de support des armatures des premier et second rotors.

Dans ce cas, la chemise cylindrique est composite et comporte une pièce en matériau magnétique placée du côté de la face tournée vers les premier et second tronçons d'arbre et une pièce en matériau amagnétique placée du côté de la face tournée vers les aimants du circuit magnétique.

L'invention concerne encore un couplemètre électromagnétique pour la détermination du couple C transmis par un organe moteur à un organe récepteur à travers un arbre de torsion dont une première extrémité est reliée à l'organe moteur et la seconde extrémité est reliée à l'organe récepteur, caractérisé en ce qu'il comprend en outre un dispositif de mesure de déphasage angulaire du type défini plus haut, dans lequel lesdits premier et second tronçons d'arbre tournant sont constitués par lesdites première et seconde extrémités d'arbre de torsion et en ce qu'il comprend en outre des moyens de mesure de la température T de l'arbre et des moyens de calcul de la valeur du couple C à partir des informations analogiques de mesure de l'angle de torsion $\gamma$ et de la température T.

Selon une autre application possible, le dispositif selon l'invention est appliqué à la mesure d'un déphasage angulaire entre deux tronçons d'arbre appartenant à deux lignes d'arbre différentes pour synchroniser les deux lignes d'arbre avec un déphasage donné.

D'autres caractéristiques et avantages de l'invention ressortiront de la description suivante de modes particuliers de réalisation de l'invention, donnés à titre d'exemples, en référence aux dessins annexés, sur lesquels :

– la figure 1 est une vue symbolique des éléments de base d'un dispositif de mesure de déphasage angulaire selon l'invention,

– la figure 2 est une vue en élévation avec demi-coupe axiale de la partie mécanique et électromagnétique d'un exemple de dispositif de mesure de déphasage angulaire selon l'invention, appliqué à la mesure d'un angle de torsion,

– les figures 3 et 4 sont des sections selon les plans III-III et IV-IV de la figure 2 montrant deux couples de rotor et stator dentés pour lesquels les positions relatives entre rotor et stator sont différentes par suite d'un déphasage angulaire correspondant à l'angle de torsion de l'arbre portant les rotors,

– la figure 5 montre le schéma électrique d'un premier mode de réalisation de circuits de mesure faisant partie du dispositif de mesure selon l'invention,

– la figure 6 représente le schéma électrique d'un second mode de réalisation de circuits de mesure faisant partie du dispositif de mesure selon l'invention, et

– la figure 7 est une vue de détail montrant un exemple de réalisation de bobines mises en oeuvre dans les circuits de mesure des figures 5 et 6.

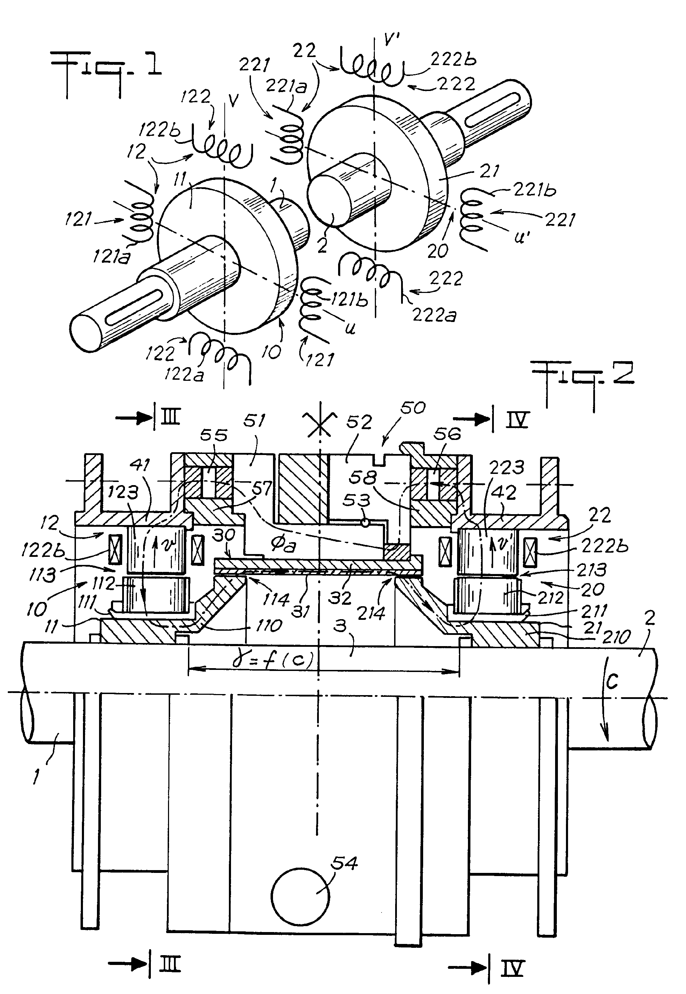

La figure 1 montre en perspective, en représentation symbolique, deux tronçons d'arbre tournant 1, 2 pouvant faire partie de deux lignes d'arbre différentes, ou pouvant être constitués par deux extrémités d'un arbre de machine capable de présenter une certaine déformation par torsion, ou encore pouvant être reliées à un barreau de torsion étalonné. Chaque tronçon d'arbre tournant 1, 2 est équipé d'un système électromagnétique 10, 20 constituant une demi-machine, l'ensemble des deux demi-machines permettant de détecter et mesurer un déphasage angulaire entre ces deux tronçons 1, 2.

Chaque système électromagnétique 10, 20 comprend un disque denté 11 respectivement 21 en matériau ferromagnétique feuilleté constituant un rotor solidaire du tronçon d'arbre 1, 2 correspondant, et un stator 12, 22 fixe placé en regard du rotor correspondant 11, 21 et comprenant d'une part une couronne dentée à deux paires de poles en matériau ferromagnétique feuilleté (non représentée sur la figure 1) entourant le rotor 11, 21 correspondant de façon coaxiale, et d'autre part des enroulements 121a, 121b, 122a, 122b resp. 221a, 221b, 222a, 222b disposés dans des encoches autour des poles des couronnes dentées.

Les enroulements 121a, 121b; 122a, 122b; 221a, 221b; 222a, 222b de chaque paire d'enroulements 121, 122, 221, 222 sont disposés de façon diamétralement opposée par rapport au rotor correspondant 11, 21 et montés en série. En revanche, les paires d'enroulements 121, 221 resp 122, 222 de chacun des stators 12, 22, qui sont disposés selon des directions parallèles, sont montées en opposition. Pour chacun des stators 12, 22, la première paire d'enroulements 121, 221 est disposée selon une première direction, par exemple horizontale, u, u' tandis que la seconde paire d'enroulements 122, 222 est disposée selon une seconde direction v, v' perpendiculaire à la première direction u, u'.

La mesure du courant induit circulant dans les diverses paires d'enroulements 121, 122, 221, 222 des stators 12, 22 lorsque les tronçons d'arbre 1, 2 sont en rotation permet de déterminer le déphasage angulaire entre ces deux tronçons d'arbre 1, 2 et permet ainsi soit de maintenir ce déphasage angulaire à une valeur prédéterminée si les deux tronçons d'arbre 1, 2 appartiennent à deux lignes d'arbre différentes, soit de déterminer un angle de torsion si les deux tronçons d'arbre 1, 2 sont réunis à un barreau de torsion étalonné ou constituent les extrémités d'un arbre unique, l'un des tronçons d'arbre (par exemple le tronçon 2) étant soumis à un couple moteur tandis que l'autre tronçon d'arbre (par exemple le tronçon 1) est soumis à un couple résistant.

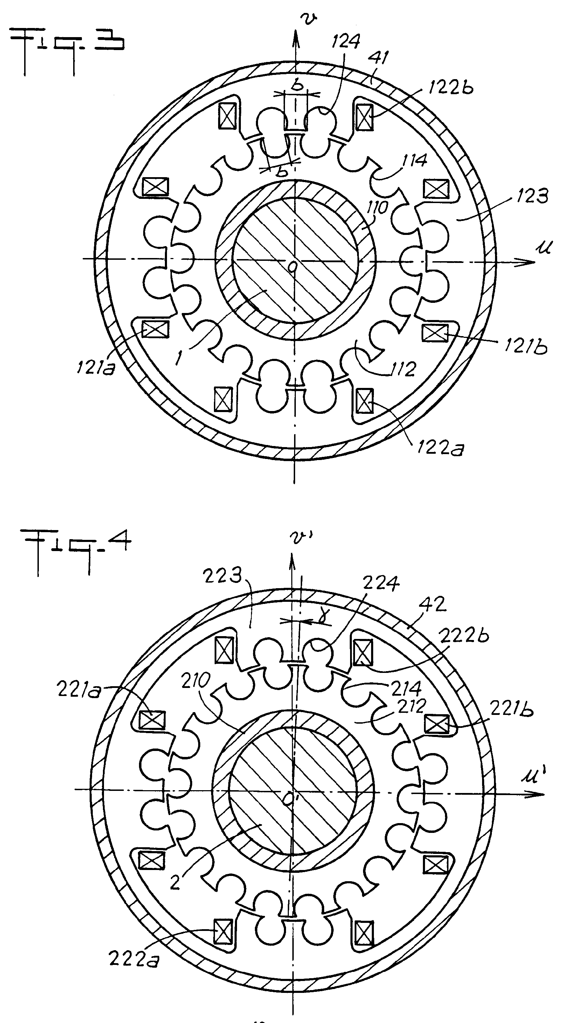

On considèrera dans la suite de la description, notamment en référence aux figures 2 à 4, le cas d'une application à la mesure d'un angle de torsion entre deux extrémités d'arbre tournant 1, 2 réunies par une partie intermédiaire 3 capable de présenter une certaine torsion. La détermination de l'angle de torsion entre les deux extrémités d'arbre 1, 2 permet ensuite, de façon connue en soi, de déterminer le couple exercé sur l'ensemble tournant 1, 2, 3. Comme on le sait, la mesure de couple sur des ensembles tournants est utile dans de très nombreux domaines techniques, tels que la mécanique par exemple pour des accouplements, transmissions, réducteurs, boîtes de vitesse, pompes, turbines, moteurs hydrauliques, freins, bancs d'essais, ventilateurs, etc..

l'électrotechnique pour des moteurs et génératrices, le génie chimique par exemple pour des extrudeuses, mélangeurs.

L'architecture générale du dispositif de mesure de déphasage selon l'invention, utilisé à titre d'exemple en couplemètre sera maintenant explicitée en référence aux figures 2 à 4.

Le couplemètre selon l'invention repose sur le fait que le couple C transmis par l'organe moteur (par exemple une turbine) à l'organe récepteur (par exemple un frein) à travers un arbre de torsion 3, produit une torsion de cet arbre $\gamma$ proportionnelle au couple à mesurer, ne dépendant pratiquement que de la température de cet arbre (compte tenu de la variation du module de torsion en fonction de la température).

Deux rotors dentés 11, 21 sont fixés aux deux extrémités 1, 2 de cet arbre 3 de sorte que le déphasage angulaire $\gamma$ de ces deux rotors 11, 21 est égal à l'angle de torsion à mesurer (voir figure 1).

Ces deux rotors 11, 21 sont associés à deux stators 12, 22 et à un circuit magnétique excité par des aimants 55, 56, l'ensemble constituant une machine homopolaire conformément au schéma de la figure 2.

La position angulaire relative des deux stators 12, 22 peut être ajustée avec une précision voisine de $10^{-4}$, grâce à un plateau tournant 50 à vernier mécanique muni d'un capteur de position de haute précision, par exemple de type optique.

La caractéristique $\gamma = f(C)$ de l'arbre de torsion 3 est préalablement obtenue par un étalonnage, pour différentes températures.

Dans ces conditions la mesure du couple C consiste :

a) à mesurer l'angle $\gamma$ produit par le couple C, et la température T par exemple à l'aide d'un thermocouple,

b) à utiliser la caractéristique $\gamma = f (C,T)$ pour en déduire le couple.

Dans ces conditions, le couplemètre fonctionne électriquement comme un torsiomètre.

De façon plus particulière, le dispositif de mesure de déphasage angulaire proprement dit, ou torsiomètre, comporte sur le plan électromagnétique deux demi-machines 10, 20 identiques disposées sur les tronçons d'arbre 1, 2.

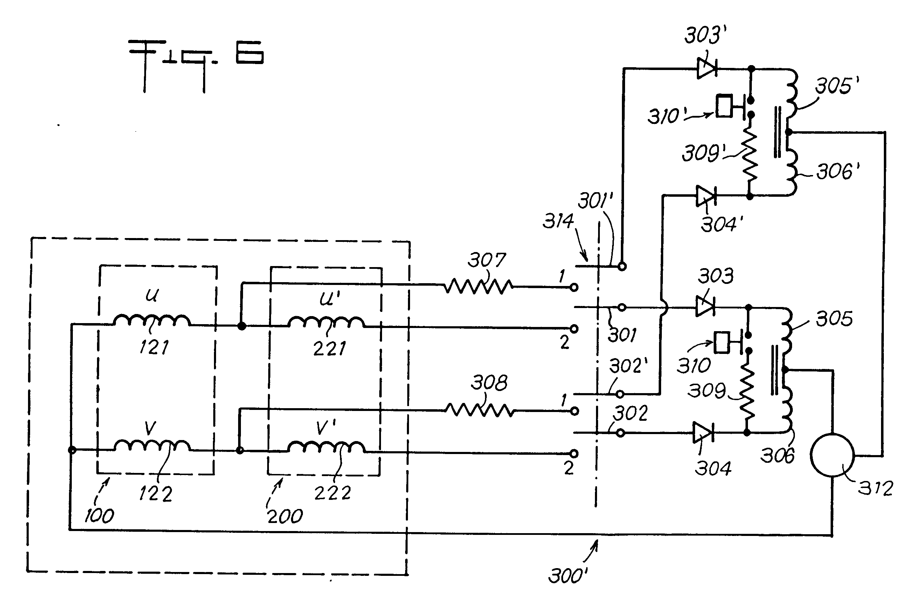

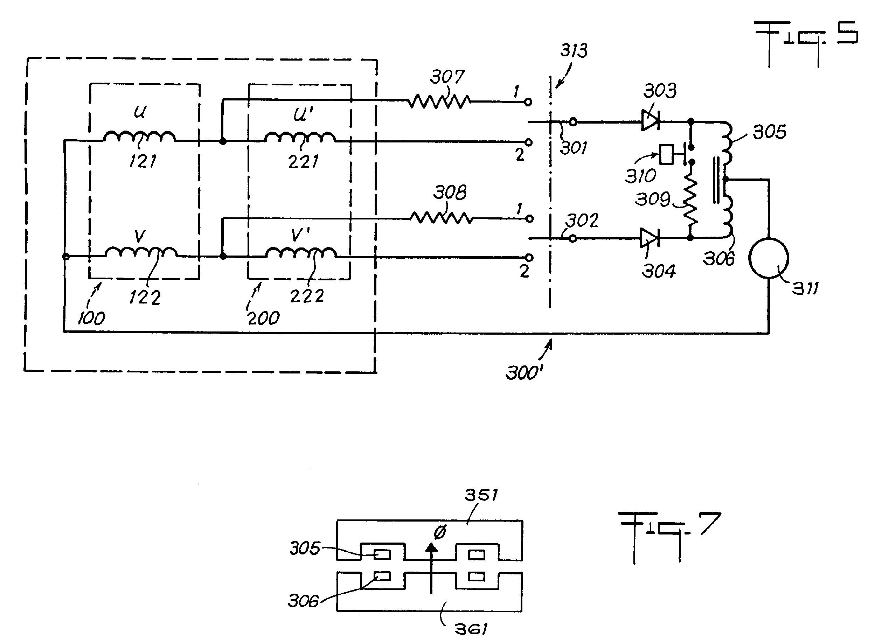

Pour chaque demi-machine 10, 20, le rotor 11, 21 comprend un support 110, 111 resp. 210, 211 monté sur le tronçon d'arbre 1 resp. 2 et portant un empilement de tôles ferromagnétiques 112 resp. 212 constituant un rotor annulaire muni à sa périphérie de dents de largeur b régulièrement espacées et séparées par des encoches 114 resp. 214 de largeur b. Dans l'exemple des figures 3 et 4, le rotor 11, 21 comprend 18 dents, mais ce nombre peut naturellement être modifié.

Le stator 12, 22 de chacune des demi-machines 10, 20 comprend un empilement 123, 223 de tôles ferromagnétiques en forme de couronne entourant de façon concentrique le rotor correspondant 11, 21 en ménageant un entrefer 113, resp. 213. Les couronnes feuilletées 123, 223 sont montées sur des supports 41 resp. 42 solidaires des deux parties 51, 52, en contact par des roulements 53, d'un plateau tournant 50 permettant d'ajuster à l'aide d'un bouton de réglage 54 les positions relatives des stators 12, 22 afin que les axes v, v′ (voir figures 1 et 3, 4) soient parallèles.

Les couronnes feuilletées 123, 223 des stators 12, 22 présentent sur quatre secteurs angulaires disposés en croix des dents de largeur b égale à celle des dents et des encoches 114, resp. 214 des armatures de rotor 112 resp. 212, et séparées par des encoches 124 resp. 224. Dans l' exemple des figures 3 et 4, chaque secteur denté constituant un pôle de stator comprend trois dents.

Des enroulements 121a, 121b, 122a, 122b, 221a, 221b, 212a, 222b sont disposés en croix autour des portions dentées des couronnes feuilletées 123, 223 et sont connectés de la façon déjà indiquée en référence à la figure 1.

A titre d'exemple, la largeur de dent b peut être de 10°, et les tôles magnétiques constituant les armatures rotoriques 112, 212 et les couronnes feuilletées 123, 223 sont de préférence des tôles à faibles pertes à haute fréquence.

La forme des lignes de circulation de champ magnétique dans le circuit magnétique de la machine homopolaire est représentée en traits discontinus sur la figure 2. Les pièces 110, 111 resp. 210, 211 de support des armatures de rotor feuilletées 112, 212 qui sont montées sur l'arbre magnétique 3 sont destinées à canaliser les lignes de champ magnétique vers une chemise cylindrique composite 30 solidaire de l'une des parties 51 du plateau tournant 50 et entourant l'arbre 3 en ménageant des entrefers 114, 214 avec les pièces 110, 210 de support des armatures rotoriques 112, 212. La chemise 30 comporte une plaque en matériau magnétique 31 du côté tourné vers l'arbre 3, qui est rapportée sur une pièce 32 en matériau amagnétique solidaire de la partie 51 du plateau tournant 50. Cette configuration est avantageuse lorsque l'arbre 3 est en un matériau amagnétique tel que le titane, mais la chemise 30 peut être supprimée si l'arbre 3 est lui-même en un matériau qui permet la fermeture des lignes de champ magnétique.

Les aimants 55, 56 qui sont à faible coefficient de variation thermique, sont montés dans des couronnes 57, 58 solidaires chacune d'une partie 51, 52 du plateau tournant 50 et d'un support 41, 42 de stator 12, 22.

On indiquera maintenant de façon plus détaillée le principe du dispositif de mesure de déphasage angulaire proprement dit, qui constitue un torsiomètre dans l'exemple considéré, et les circuits électriques de mesure en référence aux figures 5 à 7.

En l'absence de torsion, le plateau tournant 50 est réglé de telle sorte que les axes rectangulaires u, v (figures 1 et 3) de la première demi-machine 10 soient respectivement parallèles aux axes rectangulaires u′, v′ (Figures 1 et 4) de la seconde demi-machine 20.

Les deux enroulements 121a, 121b; 122a, 122b; 221a, 221b; 222a, 222b correspondant à chacun des axes u, v, u′, v′ sont mis en série pour constituer les paires d'enroulements 121, 122, 221, 222 aux bornes desquelles on obtient des tensions résultantes Eu, Ev, Eu′, Ev′.

Les paires d'enroulements 121 sont en revanche montées en opposition avec les paires d'enroulements 221 et les paires d'enroulements 222 sont montées en opposition avec les paires d'enroulements 222 pour fournir des tensions résultantes U, V respectivement égales à Eu′-Eu et Ev′-Ev et dépendant des phases relatives de la tension Eu′ par rapport à la tension Eu respectivement de la tension Ev′ par rapport à la tension Ev, c'est-à-dire dépendant de l'angle de torsion $\gamma$.

Conformément à l'invention, on ne mesure pas les déphasages des tensions Eu′, Eu resp. Ev′, Ev, afin d'éviter l'obligation de comparer l'écart du temps de passage à zéro de deux ondes alternatives avec une base de temps fournie par une horloge extérieure, et donc d'éviter la mise en oeuvre de circuits de mesure relativement complexes qui de plus ne permettent pas de fournir des résultats suffisamment indépendants de la vitesse de rotation de l'arbre.

Au contraire, selon la présente invention, l'angle de torsion est mesuré par une méthode analogique et intégrale ne nécessitant que l'utilisation d'un instrument de mesure parfaitement connu et maîtrisé, à savoir un ampèremètre pour la mesure d'intensités de courant ou un quotientmètre pour la mesure directe de rapports d'intensités de courant.

Le schéma électrique du dispositif de mesure de déphasage angulaire selon l'invention est représenté sur la figure 5 selon un premier mode de réalisation.

Un commutateur 313 comporte deux contacts mobiles 301, 302 reliés chacun en permanence à une diode 303 resp. 304 montée en série avec une inductance 305, resp. 306 elle-même connectée à une borne d'un ampèremètre 311 dont l'autre borne est connectée à un point commun aux paires d'enroulements 121, 122 de l'ensemble d'enroulements 100 de la première demi-machine 10.

Dans une première position (N°1) du commutateur 313, les contacts mobiles 301, 302 sont connectés à des résistances de compensation 307 resp. 308 elles-mêmes connectées respectivement aux secondes extrémités des paires d'enroulements 121, 122 non reliées à l'ampèremètre 311. Dans cette position, l'ampèremètre 311 assure la mesure de l'intensité d'un courant continu $I_1$ dépendant de la somme des courants alternatifs circulant dans l'ensemble des paires d'enroulements 121, 122. Les résistances 307, 308 visent notamment à compenser l'absence des paires d'enroulements 221, 222 dans les circuits de mesure lorsque le commutateur est dans sa position N°1.

Dans une seconde position (N°2) du commutateur 313, les contacts mobiles 301, 302 sont reliés respectivement aux extrémités des paires d'enroulements 221, 222 non reliées aux paires d'enroulements 121, 122. Dans cette position, l'ampèremètre 311 assure la mesure de l'intensité d'un courant continu $I_2$ dépendant de la somme des différences d'intensité du courant parcourant les paires d'enroulements montées en opposition 121, 221 et 122, 222.

A partir des valeurs mesurées $I_1$ et $I_2$, la valeur du déphpasage angulaire $\gamma$ à mesurer est calculée par la simple formule :

$$\gamma = (b/2) \cdot I_2/I_1$$

où b représente la largeur moyenne des dents des couronnes feuilletées 123, 223 des stators 12, 22, exprimée en mesure d'angle.

Le courant $I_1$ est lui-même très sensiblement constant puisqu'il ne varie pratiquement qu'avec le flux d'aimant, c'est-à-dire avec la température.

Il s'ensuit que la variation du courant $I_2$ représente bien la variation du déphasage angulaire et donc du couple C.

Les diodes 303, 304 sont choisies de telle manière que la chute de tension à leurs bornes soit négligeable par rapport aux tensions mises en jeu dans les ensembles d'enroulements 100, 200 des deux demi-machines 10, 20. De même, si la constante de temps de l'inductance 305, 306, qui joue le rôle d'intégrateur, est suffisamment élevée, la chute de tension due à cette inductance n'est pas à même d'affecter la linéarité des mesures.

On a représenté sur la figure 7 un exemple d'inductance avec un circuit magnétique 351, 361 qui comporte deux bobines identiques 305, 306 superposées montées en opposition et parcourues l'une par le courant circulant dans les enroulements 121, 221 orientés selon les axes u, u′ l'autre par le courant circulant dans les enroulements 122, 222 orientés selon les axes v, v′. Les variations d'amplitude du flux résultant dans le circuit magnétique 351, 361 sont ainsi multipliées par deux. Par ailleurs,dans le cas d'une inductance 305, 306 commune aux mesures des courants $I_1$ et $I_2$, toute variation accidentelle de la valeur de l'inductance 305, 306 influe dans la même proportion sur la mesure des intensités $I_1$ et $I_2$ et par conséquent n'influe pas sur le résultat.

La figure 6 montre un circuit de mesure 300′ qui peut être substitué au circuit de mesure 300 de la figure 5.

Selon ce second mode de réalisation, on effectue simultanément les mesures de l'intensité des courants $I_1$ et $I_2$ précités, et non de façon successive dans le temps. Un quotientmètre 312 assurant la mesure des intensités $I_1$ et $I_2$ et effectuant directement leur rapport est ainsi substitué à l'ampèremètre 311 de la figure 5.

Dans le schéma de la figure 6, les contacts mobiles 301, 302 d'un commutateur 314, reliés à un circuit composé des éléments 303 à 306 et 309, 310 analogues aux éléments correspondants de la figure 5, sont connectés par exemple par les bornes N°2 du conducteur 314 aux enroulements 121, 221 resp. 122, 222 tandis qu'un second circuit composé d'éléments 303′ à 306′ et 309′, 310′ identiques aux éléments portant les mêmes numéros de référence non primés et connectés de la même façon, est connecté par des contacts mobiles 301′, 302′ aux bornes N°1 et par là-même aux résistances de compensation 307 et 308 montées en série avec les enroulements 121, 122 respectivement. Les points communs aux enroulements 305, 306 et 305′, 306′ des inductances de charge des deux circuits sont reliés à deux entrées du quotientmètre 312 qui fournit directement une valeur proportionnelle au déphasage angulaire $\gamma$.

Naturellement, dans le cas du mode de réalisation de la figure 6, le commutateur 314 peut être supprimé, les contacts mobiles 301, 301′, 302, 302′ étant remplacés par des liaisons fixes. Les divers contacts mobiles 301, 302, 301′, 302′ peuvent également être remplacés par des moyens de commutation électronique statiques tels que des circuits à thyristors par exemple. Ceci peut aussi s'appliquer aux contacts 301, 302 de la figure 5.

Dans le cas du montage de la figure 6 comme dans celui de la figure 5, les paires d'inductances identiques 305, 306 et 305′, 306′ peuvent être constituées par une paire de bobines montées sur un circuit magnétique commun conformément au mode de réalisation de la figure 7. Les bobines 305, 306 resp. 305′, 306′ présentent un point commun de connexion qui est relié à l'appareil de mesure 311 ou 312, l'autre borne de l'appareil de mesure 311, 312 étant connectée au point commun entre les paires d'enroulements 121, 122 (figures 5 et 6).

Les mesures effectuées à l'aide d'un dispositif conforme à l'invention montrent que les courants de référence $I_1$ et de mesure $I_2$ mesurés à l'aide de l'ampèremètre 311 ou du quotientmètre 312 qui correspondent respectivement à la composante continue et à une valeur moyenne du courant présentent bien l'allure triangulaire résultant de l'effet d'intégration de l'inductance de charge sur une tension de forme approximativement carrée, et que l'amplitude de ces courants est indépendante de la vitesse de rotation. Dans le cas de mesures de très haute précision, les corrections éventuelles nécessaires pour tenir compte du facteur vitesse de rotation ne sont dans tous les cas que du deuxième ou troisième ordre.

Pour que la précision des mesures soit respectée, il convient naturellement que les signaux délivrés par les stators 12, 22 des deux demi-machines 10, 20 soient identiques en amplitude. Dans le cas où des dissymétries apparaissent entre les circuits magnétiques de chacun des stators 12, 22 dans le flux des aimants ou le flux de fuite des circuits magnétiques, des compensations peuvent être effectuées au moyen de bagues magnétiques de shunt placées sur chaque couronne porte aimants 57, 58.

La justification de l'équation (1) sera donnée ci-dessous.

Si l'on considère un angle de rotation x d'un rotor par rapport à un stator variant entre o et l'angle b correspondant à la largeur d'une dent de stator ou de rotor, la perméance par dent et par unité de longueur varie linéairement. Pour une force magnéto-motrice donnée, les flux utiles traversant les paires d'enroulements 121, 122, 221, 222 et produisant des tensions induites dans ces enroulements sont proportionnels aux perméances correspondantes et définissent des courbes en triangle en fonction de l'angle de rotation x . La valeur maximale du flux utile $\phi_{au}$ représente la valeur utile constante du flux d'aimant du circuit magnétique.

La différence de flux $\Delta\phi_\gamma$ entre une paire d'enroulements 121 resp. 122 de la première demi-machine et la paire d'enroulements correspondante 221 resp. 222 de la deuxième demi-machine est proportionnelle au déphasage angulaire $\gamma$ selon la formule (2)

$$\Delta\phi_\gamma = \frac{\phi_{au}}{b} \cdot \gamma \quad (2)$$

où $\phi_{au}$ représente la valeur maximale du flux utile, qui est une constante, et
b représente la largeur d'une dent exprimée en unité d'angle.

Par ailleurs, le courant continu résultant $I_2$ dont l'intensité est mesurée par un ampèremètre 311 est égal à la somme du courant circulant dans les paires d'enroulements 121, 221 et du courant circulant dans les paires d'enroulements 122, 222.

Les inductances de charge 305, 306 présentent elles-mêmes un même nombre de spires n et un même coefficient d'inductance L.

Pour la branche de circuit comprenant les éléments 121, 221, 303, 305 de la figure 5, on peut écrire.

$$n \frac{d}{dt}(\phi_u - \phi_u') = L \frac{d}{dt}(i_{u'u}) \quad (3)$$

où $\phi_u$, $\phi_{u'}$ sont les flux dans les paires d'enroulements 121 et 221 et iu'u est l'intensité du courant dans la branche de circuit considérée.

Après intégration, la formule (3) permet de déduire la relation suivante :

$$i_{u'u} = \frac{n}{L} \Delta\phi_{u'u} + i_o \quad (4)$$

où $\Delta\phi_{u'u}$ représente la différence de flux entre les paires d'enroulements 121 et 221.

Une relation analogue à la relation ( 4) peut être écrite en considérant la branche de circuit comprenant les éléments 122, 222, 304, 306 de la figure 6:

$$i_{v'v} = \frac{n}{L} \Delta\phi_{v'v} + i_o \quad (5)$$

où $\Delta\phi_{v'v}$ représente la différence de flux entre les paires d'enroulements 122 et 222.

La somme des flux utiles dans les paires d'enroulements 121 et 122 resp. 221 et 222 reste égale à une valeur constante $\phi_{au}$ tandis que la somme des différences des flux utiles dans les paires d'enroulements 121, 221 ($\Delta\phi_{u'u}$) et les paires d'enroulements 122, 222 ($\Delta\phi_{v'v}$) reste nulle en permanence.

Par ailleurs, lorsque l'intensité du courant $i_{v'v}$ est nulle, la différence de flux dans les paires d'enroulements 122 et 222 est égale à la valeur - $\Delta\phi_\gamma$.

Il ressort des relations (2), (4) et (5) que la valeur de l'intensité $I_2$ du courant résultant mesurée par un ampèremètre 311, qui est égale à la somme des intensités des courants $i_{v'v}$ et $i_{u'u}$, est donnée par la formule :

$$I_2 = \frac{2 n \phi_{au}}{L b} \cdot \gamma \quad (6)$$

où n représente le nombre de spires de chacune des bobines 305, 306.

$\phi_{au}$ représente la valeur maximale du flux utile, b représente la largeur moyenne d'une dent exprimée en unité d'angle, et
$\gamma$ représente le déphasage angulaire que l'on cherche à déterminer.

Si l'on considère d'une part la branche de circuit comprenant la paire d'enroulements 121, la faible résistance de compensation 307, la diode 303 et l'inductance de charge 305, et d'autre part la branche de circuit comprenant la paire d'enroulements 122, la faible résistance de compensation 308, la diode 304 et l'inductance de charge 306, l'intensité totale $I_1$ du courant mesuré par l'ampèremètre 311 entre les noeuds des deux branches de circuit susmentionnées répond à une équation (7) qui peut être obtenue par un raisonnement analogue à celui ayant conduit à l'équation (6), en considérant les flux utiles dans les pairees d'enroulements 121, 122 et les intensités du courant circulant dans les inductances de charge 305, 306.

L'équation (7), qui s'applique aussi au montage de la figure 6 dans la mesure où l'ensemble des bobines 305, 306, 305', 306' présentent les mêmes valeurs d'inductance et les mêmes nombre de spires, s'écrit :

$$I_1 = n \frac{\phi_{au}}{L} \quad (7)$$

où n , $\phi_{au}$ et L représentent les grandeurs correspondantes explicitées ci-dessous en référence à l'équation (6).

La formule (1) mentionnée plus haut dans la description se déduit immédiatement des équations (6) et (7).

L'invention permet d'effectuer des mesures de très grande sensibilité et de haute précision dans la mesure où, par suite d'un ensemble de compensations effectuées automatiquement grâce à la structure du dispositif de mesure, il est possible d'obtenir directement une mesure de déphasage angulaire fiable à partir d'une mesure analogique à l'aide d'un ampèremètre ou d'un quotientmètre sans nécessité de transformer au préalable un signal analogique en signal numérique, et avec une démodulation de signaux créée par la rotation des rotors dentés qui s'effectue automatiquement.

**Revendications**

1. Dispositif de mesure de déphasage angulaire entre un premier tronçon d'arbre tournant (1) et un second tronçon d'arbre tournant (2), comprenant un premier rotor denté (11) fixé au premier tronçon d'arbre (1), un second rotor denté (21) identique au premier rotor (11) et fixé au second tronçon d'arbre (2) et des premier et second stators (12;22) identiques disposés en regard respectivement des premier et second rotors (11;21), les stators (12;22) comprennent chacun une première paire (121, 221) d'enroulements (121a, 121b; 221a, 221b) selon une première direction, les enroulements (121a, 121b; 221a, 221b) de chaque paire d'enroulements (121; 122) étant montés en série avec un organe de redressement et la première paire d'enroulements (221) du second stator (22) étant montées en opposition par rapport à la première paire d'enroulements (121) du premier stator (12), caractérisé en ce que les enroulements de chaque première faite sont diamétralement opposés et qu'une seconde paire (122; 222) d'enroulements (122a, 122b; 222a, 222b) sont diamétralement opposés selon une deuxième direction perpendiculaire à la première direction, et en ce qu'il comprend en outre un circuit magnétique excité par des aimants (55, 56) pour constituer une machine homopolaire, des moyens pour former un premier circuit comportant le montage série de la première paire (121) d'enroulements du premier stator (12), d'un organe de redressement (303), d'une résistance de compensation (307) et d'une inductance (305), des moyens (311) pour former un deuxième circuit comportant le montage série de la seconde paire (122) d'enroulements du premier stator (12), d'un organe de redressement (304), d'une résistance de compensation (308) et d'une inductance (306), des moyens (311), (312) pour mesurer l'intensité $I_1$ du courant continu correspondant à la somme des courants circulant dans les l'ensemble premier et deuxième circuits montés en parallèle, des moyens pour former un troisième circuit comportant le montage série des premières paires (121, 221) d'enroulements des premier et second stators (12, 22) montés en opposition, d'un organe de redressement (303) et d'une inductance (305) des moyens pour former un quatrième circuit comportant le montage série des secondes paires (122, 222) d'enroulements des premier et second stators (12, 22) montées en opposition, d'un organe de redressement (304) et d'une inductance (306) des moyens (311), (312) pour mesurer l'intensité $I_2$ du courant continu correspondant à la somme des courants circulant dans l'ensemble des troisième et quatrième circuits montés en parallèle et des moyens de calcul du déphasage angulaire $\gamma$ à partir de la formule $\gamma = (b/2).I_2/I_1$ où b représente la largeur des dents des premier et second rotors (11; 21) exprimée en unités de mesure d'angle, les inductances des premier, deuxième, troisième et quatrième circuits étant toutes identiques.

2. Dispositif selon la revendication 1, caractérisé en ce qu'il comprend des moyens pour former simultanément les premier, deuxième, troisième et quatrième circuits et des moyens (312) pour effectuer une mesure simultanée de l'intensité $I_1$ du courant circulant dans les premier et deuxième circuits et de l'intensité $I_2$ du courant circulant dans les troisième et quatrième circuits, et pour déterminer le quotient des deux intensités $I_1$ et $I_2$ des courants mesurés simultanément.

3. Dispositif selon la revendication 1, caractérisé en ce qu'il comprend des moyens de commutation (301, 302) pour former de façon décalée dans le temps d'une part les premier et second circuits et d'autre part les troisième et quatrième circuits en utilisant des organes de redressement (303, 304) et des inductances (305, 306) communs.

4. Dispositif selon l'une quelconque des revendications 1 à 3, caractérisé en ce que les inductances des premier et deuxième circuits ainsi que les inductances des troisième et quatrième circuits comprennent une paire de bobines (305, 306) identiques montées en opposition sur un circuit magnétique commun et présentant un point commun de connexion relié aux moyens (311; 312) de mesure de l'intensité $I_1$, $I_2$ des courants continus circulant respectivement aux noeuds des premier et deuxième circuits et des troisième et quatrième circuits.

5. Dispositif selon l'une quelconque des revendications 1 à 4, caractérisé en ce que les premier et second tronçons d'arbre tournant (1,2) sont reliés à un barreau de torsion étalonné (3) pour constituer un torsiomètre.

6. Dispositif selon l'une quelconque des revendications 1 à 4, caractérisé en ce que les premier et second tronçons d'arbre tournant (1,2) sont constitués par les extrémités d'un arbre (3) quelconque pouvant être soumis à une torsion de façon élastique.

7. Dispositif selon l'une quelconque des revendications 1 à 6, caractérisé en ce qu'il comprend un dispositif (50) à plateau tournant pour assurer l'ajustement des positions relatives des premier et second stators (12,22).

8. Dispositif selon l'une quelconque des revendications 1 à 7, caractérisé en ce que le circuit magnétique comprend des circuits (55, 56) montés dans des première et seconde bagues (57,58) solidaires respectivement des premier et second stators (12, 22), et une chemise cylindrique (30) coaxiale aux premier et second tronçons d'arbre (1,2), disposée dans l'espace libre situé entre les premier et second rotors (11, 21) et présentant des extrémités ménageant de faibles entrefers (114, 214) avec des pièces (110, 210) de support des armatures (112, 212) des premier et second rotors (11, 21).

9. Dispositif selon la revendication 8, caractérisé en ce que la chemise cylindrique (30) est composite et comporte une pièce (31) en matériau magnétique placée du côté de la face tournée vers les premier et second tronçons d'arbre (1,2) et une pièce (32) en matériau amagnétique placée du côté de la face tournée vers les aimants (55, 56) du circuit magnétique.

10. Couplemètre électromagnétique pour la détermination du couple C transmis par un organe moteur à un organe récepteur à travers un arbre de torsion dont une première extrémité est reliée à l'organe moteur et la seconde extrémité est reliée à l'organe récepteur,
caractérisé en ce qu'il comprend un dispositif de mesure de déphasage angulaire selon l'une quelconque des revendications 1 à 9, dans lequel lesdits premier et second tronçons d'arbre tournant sont constitués par lesdites première et seconde extrémités d'arbre de torsion et en ce qu'il comprend en outre des moyens de mesure de la température T de l'arbre et des moyens de calcul de la valeur du couple C à partir des informations analogiques de mesure de l'angle de torsion $\gamma$ et de la température T.

11. Dispositif selon l'une quelconque des revendications 1 à 4, caractérisé en ce qu'il est appliqué à la mesure d'un déphasage angulaire entre deux tronçons d'arbre (1,2) appartenant à deux lignes d'arbre différentes pour synchroniser les deux lignes d'arbre avec un déphasage donné.

**Patentansprüche**

1. Vorrichtung zum Messen der Winkelphasenverschiebung zwischen einem ersten Drehwellenteil (1) und einem zweiten Drehwellenteil (2), mit einem ersten gezahnten Rotor (11), der am ersten Wellenteil (1) befestigt ist, einem zweiten gezahnten Rotor (21), der identisch ist zum ersten Rotor (11) und am zweiten Wellenteil (2) befestigt ist, und einem ersten und einem zweiten Stator (12;22), die identisch sind und entsprechend gegenüber dem ersten und zweiten Rotor (11;21) angeordnet sind, wobei die Statoren (12;22) jeweils ein erstes Paar (121,221) von Wicklungen (121a,121b;221a,221b) gemäß einer ersten Richtung aufweisen, wobei die Wicklungen (121a,121b;221a,221b) eines jeden Wicklungspaares (121;122) in Reihe mit einem Gleichrichtorgan angeordnet sind und das erste Paar Wicklungen (221) des zweiten Stators (22) gegenüber dem ersten Wicklungspaar (121) des ersten Stators (12) angeordnet sind, dadurch gekennzeichnet, daß die Wicklungen eines jeden ersten Paares diametral einander gegenüberliegend angeordnet sind, und daß ein zweites Paar (122;222) von Wicklungen (122a,122b;222a, 222b) gemäß einer zweiten Richtung senkrecht zur ersten Richtung diametral einander gegenüberliegend angeordnet sind, und daß sie weiterhin aufwest, einen magnetischen Schaltkreis, der durch Magnet (55,56) angeregt wird, um eine gleichpolige Maschine zu bilden, Einrichtungen , um einen ersten Kreis zu bilden, der die Reihenanordnung des ersten Paares (121) von Wicklungen des ersten Stators (12) aufweist, ein Gleichrichtorgan (303), einen Kompensationswiderstand (307) und eine Induktivität (305), Einrichtungen (311), um einen zweiten Schaltkreis zu bilden, der die Reihenanordnung des zweiten Paares (122) von Wicklungen des ersten Stators (12), ein Gleichrichtorgan (304), einen Kompensationswiderstand (308) und eine Induktivität (306), Einrichtungen (311,312) zum Messen der Stärke $I_1$ des kontinuierlichen Stromes aufweist, entsprechend der Summe der in der Anordnung der ersten und zweiten parallel angebrachten Schaltkreise zirkulierenden Ströme, Einrichtungen zum Bilden eines dritten Schaltkreises, der die Reihenanordnung der ersten Paare (121,221) von Wicklungen des ersten und zweiten Stators (12,22), die einander gegenüberliegend angeordnet sind, ein Gleichrichtorgan (303) und eine Induktivität (305) aufweist, Einrichtungen zum Bilden eines vierten Schaltkreises, der die Reihenanordnung der zweiten Paare (122,222) von Wicklungen der ersten und zweiten Statoren (12,22) aufweist, die einander gegenüberliegend angeordnet sind, ein Gleichrichtorgan (304) und eine Induktivität (306), Einrichtungen (311,312) zum Messen der Stärke $I_2$ des kontinuierlichen Stromes entsprechend der Summe der in der Anordnung des dritten und vierten Schaltkreises zirkulierenden Ströme, die parallel angeordnet sind, und Recheneinrichtungen der Winkelverschiebung $\gamma$ ausgehend von der Formel $\gamma = (b/2).I_2/I_1$ aufweist, wobei die Zahnbreite des ersten und zweiten Rotors (11;21) darstellt, die als Winkelmeßeinheiten ausgedrückt sind, wobei die Induktivitäten des ersten, zweiten, dritten und vierten Schaltkreises alle identisch sind.

2. Vorrichtung nach Anspruch 1, dadurch gekennzeichnet, daß sie Einrichtungen zum gleichzeitigen Bilden des ersten, zweiten, dritten und vierten Schaltkreises aufweist und Einrichtungen (312) zum Ausführen einer gleichzeitigen Messung der Stärke $I_1$ des in dem ersten und zweiten Schaltkreis zirkulierenden Stromes und der Stärke $I_2$ des in dem dritten und vierten Schaltkreis zirkulierenden Stromes aufweist, und zur Bestimmung des Quotienten der beiden Stromstärken $I_1$ und $I_2$ der gleichzeitig gemessenen Ströme.

3. Vorrichtung nach Anspruch 1, dadurch gekennzeichnet, daß sie Kommutationseinrichtungen (301, 302) aufweist, um auf zeitversetzte Weise einerseits den ersten und zweiten Schaltkreis und andererseits den dritten und vierten Schaltkreis unter Verwendung von Gleichrichtorganen (303, 304) und gemeinsamen Induktivitäten (305, 306) zu bilden.

4. Vorrichtung nach einem der Ansprüche 1 bis 3, dadurch gekennzeichnet, daß die Induktivitäten des ersten und des zweiten Schaltkreises sowie die Induktivitäten des dritten und des vierten Schaltkreisea ein identisches Spulenpaar (305, 306) aufweisen, die einander gegenüberliegend auf einem gemeinsamen magnetischen Schaltkreis angeordnet sind und einen gemeinsamen Verbindungspunkt aufweisen, der mit den Einrichtungen (311; 312) zum Messen der Stärke $I_1$, $I_2$ der kontinuierlich zirkulierenden Ströme entsprechend an den Knoten des ersten und des zweiten Schaltkreisea und dea dritten und des vierten Schaltkreises zirkulieren.

5. Vorrichtung nach einem der Ansprüche 1 bis 4, dadurch gekennzeichnet, daß das erste und das zweite Drehwellenteil (1, 2) mit einem geeichten Torsionsbalken (3) verbunden sind, um ein Torsionsmeßgerät zu bilden.

6. Vorrichtung nach einem der Ansprüche 1 bis 4, dadurch gekennzeichnet, daß das erste und das zweite Drehwellenteil (1,2) von den Enden irgendeiner Welle (3) gebildet werden, die auf elastische Weise einer Torsion unterworfen werden kann.

7. Vorrichtung nach einem der Ansprüche 1 bis 6, dadurch gekennzeichnet, daß sie eine Vorrichtung (50) mit drehenden Platten aufweist, um die Einstellung der relativen Stellungen des ersten und des zweiten Stators (12, 22) sicherzustellen.

8. Vorrichtung nach einem der Ansprüche 1 bis 7, dadurch gekennzeichnet, daß der magnetische Schaltkreis Schaltkreise (55, 56) aufweist, die in einem ersten und einem zweiten Ring (57, 58) angeordnet sind, die entsprechend mit dem ersten und dem zweiten Stator (12, 22) verbunden sind und einen zylindrischen Überzug (30) aufweisen, der koaxial zum ersten und zum zweiten Wellenteil (1,2) angeordnet ist, der in dem Freiraum angeordnet ist, der zwischen dem ersten und zweiten Rotor (11, 21) angeordnet ist und Enden aufweist, die schwache Luftspalte (114, 214) mit Stützteilen (110, 210) von Armaturen (112, 212) des ersten und zweiten Rotors (11, 22) ausbilden.

9. Vorrichtung nach Anspruch 8, dadurch gekennzeichnet, daß der zylindrische Überzug (30) aus Verbundwerkstoff ist und ein Teil (31) aus einem magnetischen Material ist, das auf der Seite der zu dem ersten und zweiten Wellenteil (1, 2) gedrehten Seite plaziert ist, und ein zweites Teil (32) aus nicht magnetischem Material aufweist, das auf der Seite der zu den Magneten (55, 56) des magnetischen Schaltkreises gedrehten Seite angeordnet ist.

10. Elektromagnetischer Drehmomentmesser zum Bestimmen des Moments C, das von einem Antriebsorgan auf ein angetriebenes Organ über eine Torsionswelle übertragen wird, von der ein erstes Ende mit dem Antriebsorgan und das zweite Ende mit dem angetriebenen Organ verbunden ist, dadurch gekennzeichnet, daß er eine Meßvorrichtung der Winkelphasenverschiebung nach einem der Ansprüche 1 bis 9 aufweist, bei dem das erste und zweite Drehwellenteil gebildet wird durch die ersten und zweiten Torsionswellenenden und daß er weiterhin Meßeinrichtungen der Temperatur T der Welle und Einrichtungen zum Berechnen des Wertes des Moments C, ausgehend von Analogmeßwerten des Torsionswinkels $\gamma$ und der Temperatur T aufweist.

11. Vorrichtung nach einem der Ansprüche 1 bis 4, dadurch gekennzeichnet, daß sie verwendet wird bei der Messung einer Winkelverschiebung zwischen zwei Wellenteilen (1, 2), die bei zwei verschiedenen Wellenlinien auftreten, um die beiden Wellenlinien mit einer vorgegebenen Winkelverschiebung zu synchronisieren.

**Claims**

1. Device for measuring an angular phase shift between a first rotary shaft section (1) and a second rotary shaft section (2), comprising a first toothed rotor (11) affixed to the first rotary shaft section (1), a second toothed rotor (21), identical to the first rotor (11), affixed to the second rotary shaft (2), and identical first and second stators (12; 22) confronting the first and second rotors (11; 21) respectively, the stators (12; 22) each comprising a first pair (121, 221) of windings (121a, 121b; 221a, 221b) aligned along a first direction, the windings (121a, 121b; 221a, 221b) of each pair of windings (221) of the second stator (22) being connected in series with a rectifying element and the first pair of windings (221) of the second stator (22) being connected in phase opposition relative to the first pair of windings (121) of the first stator (12), characterised in that the windings of each first pair are diametrically opposite each other, and in that a second pair (122; 222) of windings (122a, 122b; 222a, 222b) are diagonally opposite each other along a second direction perpendicular to said first direction, and in that it further comprises a magnetic circuit excited by magnets (55, 56) to create a homopolar machine, means for forming a first circuit comprising a serial connection with the first pair (121) of windings of the first stator (12), a rectifying element (303), a compensating resistor (307) and an inductor (305), means (311) for forming a second circuit comprising a serial connection with the second pair (122) of windings of the first stator (12), a rectifying element (304), a compensating resistor (308) and an inductor (306), means (311, 312) for measuring a value $I_1$ of the direct cur-

rent corresponding to the sum of the currents flowing in both the first and second circuits connected in parallel, means for creating a third circuit comprising a serial connection with the first pairs (121, 221) of windings of the first and second stators (12, 22) connected in opposition, a rectifying element (303) and an inductor (305), means for creating a fourth circuit comprising a serial connection of the first and second pairs (122, 222) of windings of the first and second stators (12, 22) connected in opposition, a rectifying element (304) and an inductor (306), means for measuring the value $I_2$ of a direct current corresponding to the sum of the currents flowing in both the third and fourth circuits connected in parallel, and means for calculating the angular phase shift $\gamma$ on the basis of the formula $\gamma =(b/2).I_2/I_1$, where b is the width of the teeth of the first and second rotors (11; 21) expressed in angular measurement units, the inductances of the first, second, third and fourth circuits being all identical.

2. Device according to claim 1, characterised in that it comprises means for simultaneously forming the first, second, third and fourth circuits and means (312) for simultaneously measuring the value $I_1$ of the current flowing in the first and second circuits and the value $I_2$ of the current flowing in the third and fourth circuits, and for determining the quotient of the two current values $I_1$ and $I_2$ measured simultaneously.

3. Device according to claim 1, characterised in that it comprises switching means (301, 302) for creating, in a time shifted sequence, the first and second circuits in a first instance, and the third and fourth circuits in a second instance, using common rectifying elements (303, 304) and inductors (305, 306).

4. Device according to any one of claims 1 to 3, characterised in that the inductors of the first and second circuits and the inductors of the third and fourth circuits comprise a pair of identical coils (305, 306), connected in phase opposition on a common magnetic circuit and having a common connection point connected to the means (311; 312) for measuring the values $I_1$, $I_2$ of the direct current flowing respectively in the nodes of the first and second circuits, and the third and fourth circuits.

5. Device according to any one of claims 1 to 4, characterised in that the first and second rotary shaft sections (1, 2) are joined to a calibrated torsion bar (3) to constitute a torsion meter.

6. Device according to any one of claims 1 to 4, characterised in that the first and second rotary shaft sections (1, 2) are constituted by the ends of any shaft capable of sustaining torsion in an elastic manner.

7. Device according to any one of claims 1 to 6, characterised in that it comprises a rotary plate device (50) for adjusting the relative positions of the first and second stators (12, 22).

8. Device according to any one of claims 1 to 7, characterised in that the magnetic circuit comprises circuits (55, 56) mounted in first and second rings (57, 58) that are respectively unitary with the first and second stators (12, 22), and a cylindrical sleeve (30) arranged coaxially with the first and second shaft sections (1, 2) in a free space between the first and second rotors (11, 21) and having end portions that define small air gaps (114, 214) with supporting elements (110, 210) for the armatures (112, 212) of the first and second rotors (11, 21).

9. Device according to claim 8, characterised in that the cylindrical sleeve (30) has a composite structure and comprises an element (31) made of magnetic material located at the level of the face turned towards the first and second shaft portions (1, 2) and an element made of non-magnetic material located at the level of the face turned towards the magnets (55, 56) of the magnetic circuit.

10. Torsion meter for determining the torque C transmitted from a motor unit to a receiver unit through a torsion shaft of which a first extremity is connected to the motor unit and the second extremity is connected to the receiving unit,
characterised in that it comprises an angular phase shift measuring device according to any one of claims 1 to 9, in which the first and second rotary shaft sections are constituted by the said first and second extremities of the torsion shaft, and in that it further comprises means for measuring the temperature T of the shaft and means for calculating the value of the torque C on the basis of analogue information from the measurement of the torsion angle $\gamma$ and the temperature T.

11. Device according to any one of claims 1 to 4, characterised in that it is used for the measurement of an angular phase shift between two shaft sections (1, 2) belonging to two different shaft axes for synchronising the two shaft axes with a given phase shift.

Fig.1

Fig.2

Fig. 3

Fig. 4

13

Fig. 6

EP 0 343 074 B1

Fig. 5

Fig. 7